# EUROPÄISCHE PATENTANMELDUNG

(11) **EP 4 221 070 A1**
(43) Veröffentlichungstag der Anmeldung: **02.08.2023**
(21) Anmeldenummer: 22154654.2
(22) Anmeldetag: 01.02.2022
(51) Int. Cl.: H04L 9/08

(54) **NUTZUNG QUANTENSICHERER SCHLÜSSEL IN EINEM NETZWERKSYSTEM**

(71) Anmelder: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(57) **Zusammenfassung**

Die Erfindung betrifft ein Verfahren zur Nutzung quantensicherer Schlüssel in einem Netzwerksystem, welches mehrere über mindestens ein Netzwerk miteinander vernetzte Netzelemente sowie mindestens eine QKD-Einrichtung, nämlich eine Einrichtung zum Generieren von Quantenschlüsseln nach einem Verfahren der Quantum Key Distribution, oder/und mindestens eine Entropiequelle zum Generieren von Zufallszahlen hoher Entropie für die Erzeugung quantensicherer Schlüssel umfasst. Unter auf mehreren System- und Verfahrensebenen erfolgender Anwendung des Konzeptes des robusten Kombinierers werden durch zwei Netzelemente des Netzwerksystems mindestens zwei voneinander verschiedene Zufallszahlen über disjunkte Netzwerkpfade verschlüsselt ausgetauscht, wobei die Verschlüsselung mittels verschiedener PQC-Verfahren erfolgt. Mindestens eines der Netzelemente verarbeitet mindestens zwei von ihm empfangene Zufallszahlen oder mindestens zwei mit den empfangenen Zufallszahlen gekoppelte Zufallszahlen durch Anwendung einer dafür aus einem Pool von Key Derivation Functions (KDFs) ausgewählten Prozessierungsvorschrift unter Erzeugung eines quantensicheren Schlüssels miteinander.

## Beschreibung

Die Erfindung betrifft eine Lösung zur Nutzung quantensicherer Schlüssel in einem Netzwerksystem. Die Nutzung der quantensicheren Schlüssel bezieht sich hierbei sowohl auf deren Erzeugung innerhalb des Netzwerksystems und dazu notwendige Übertragungsvorgänge als auch auf deren Verwendung, wobei Letzteres auch die Verwendung entsprechender Schlüssel für eine durch mindestens zwei Netzelemente erfolgende Erzeugung neuer gemeinsamer quantensicherer Schlüssel und deren Übertragung zum Zweck ihrer Verwendung für einen nachfolgenden gesicherten Datenaustausch zwischen den Netzelementen umfasst.

Die gemeinsame Erzeugung neuer Schlüssel durch die vorgenannten mindestens zwei Netzelemente kann dabei beispielsweise dazu dienen, Schlüssel zu erzeugen, die auch einem Erzeuger oder Bereitsteller zur Erzeugung der neuen Schlüssel verwendeter, respektive dienender Schlüssel, wie beispielsweise einem Netzprovider und/oder oder einem Betreiber von Einrichtungen zur Erzeugung und Bereitstellung entsprechender Schlüssel, zum Beispiel dem Betreiber einer Zufallszahlen hoher Entropie generierenden Entropiequelle, nicht bekannt sind. Gegenstand der Erfindung ist ein Verfahren, welches, als solches und für sich betrachtet, bekannte Techniken der Kryptographie auf unterschiedlichen Ebenen miteinander kombiniert, um hierdurch den Einsatz dieser Techniken, die jeweils selbst schon sehr sicher sind, noch sicherer zu machen.

Der Absicherung der Infrastruktur öffentlicher Netze und der über diese ausgetauschten Daten gegen potenzielle Angriffe und Manipulationen kommt eine auch weiterhin stark steigende Bedeutung zu. Ein wesentlicher Teil dieser Absicherung geschieht durch die Verschlüsselung der als Teil der Infrastruktur von Netzwerken anzusehenden, die Kommunikation und die Datenverkehre managenden Steuerdaten und der über die Netzwerke übertragenen Nutzdaten der Kommunikationsteilnehmer.

Für eine nach derzeitigen Maßstäben sichere Verschlüsselung werden häufig symmetrische Verschlüsselungsverfahren eingesetzt, bei denen für die Verschlüsselung der Daten und für deren spätere Entschlüsselung jeweils derselbe geheime Schlüssel verwendet wird. Ein Problem der symmetrischen Verschlüsselung ist es jedoch, den vorgenannten geheimen Schlüssel an die zu seiner Benutzung berechtigten Einheiten und/oder Teilnehmer zu verteilen, ohne dass hierbei die Gefahr besteht, dass der geheime Schlüssel in die Hände potenzieller Angreifer gelangt.

Neue Möglichkeiten für die Verteilung zur symmetrischen Verschlüsselung verwendbarer geheimer Schlüssel bietet insoweit die Quantenkryptografie. Diese macht es möglich, Schlüssel mit sehr hoher Entropie, das heißt, tatsächlich zufälliger Art, zu generieren und diese angriffssicher an mehrere Teilnehmer und/oder Einrichtungen zu verteilen. Hierbei ermöglichen es Verfahren der Quantum Key Distribution (QKD) entsprechende Schlüssel hoher Entropie an zumindest zwei voneinander entfernten Orten gewissermaßen gleichzeitig bereitzustellen, und zwar in der Weise, dass jeder Versuch eines Angriffs auf derartige Schlüssel unmittelbar erkannt wird, also nicht verdeckt bleiben kann. Hierfür bedarf es jedoch eines Quantenkanals, das heißt, eines Kanals zur Übertragung quantenmechanischer Zustände, zwischen den beteiligten Teilnehmern, respektive deren die Schlüssel verwendenden Einrichtungen.

Allerdings resultiert aus den für die Anwendung des QKD-Prinzips bestehenden Erfordernissen eine Reihe von Nachteilen für diese Technologie. So sind Systeme und Einrichtungen für den Einsatz der QKD-Technologie sehr teuer. Darüber hinaus ist die Reichweite der erforderlichen Quantenkanäle, jedenfalls soweit diese physisch durch typischerweise dafür in den Netzwerken verwendete, optische Quantenzustände übertragende Glasfasern realisiert werden, sehr begrenzt. Die mögliche Reichweite beträgt hierbei typischerweise zirka 100 km, allenfalls wenige 100 km, jedoch nach derzeitigem Stand nicht 1000 km oder mehr. Dies resultiert aus der Dämpfung, welche die über die Quantenkanäle (Lichtleitfasern) übertragenen quantenmechanischen Zustände unterworfen sind. Auf der anderen Seite ist prinzipbedingt ein Einsatz von Verstärkern innerhalb der Quantenkanäle nicht möglich, da die Verstärkung entsprechender quantenmechanische Zustände transportierender Signale deren Auslesen erforderlich macht, was unmittelbar zu einer Zerstörung dieser quantenmechanischen Zustände führen würde. Ferner ist das Prinzip der QKD zur Schlüsselerzeugung und -Verteilung in Mobilfunknetzen im Grunde nicht einsetzbar.

Aufgrund der vorgenannten Nachteile wurden zwischenzeitlich andere Verschlüsselungsverfahren entwickelt, die im Hinblick darauf, dass sie der QKD aus entwicklungshistorischer gewissermaßen nachfolgen und als asymmetrische Verfahren auch da zum Einsatz kommen könnten, wo einerseits die Nutzung des Prinzips der QKD nicht praktikabel ist, aber andererseits bisher existierende asymmetrische Systeme gegenüber künftig zu erwartenden Angriffen mit Quantencomputern oder vergleichbaren quantenmechanischen Mitteln nicht mehr als sicher anzusehen sind, als Post-Quantum Cryptography (PQC) bezeichnet werden. Auch derartige Verfahren gelten nach derzeitigem Stand als so sicher, dass sie einem Angriff unter Verwendung von Quantencomputern widerstehen können sollen. Jedoch wird diese Sicherheit in Ermangelung eines gegenteiligen Beweises bisher nur unterstellt. Gegenwärtig sind viele derartiger Verfahren noch in der Validierung und sie werden aus dem letztgenannten Grund auch kontinuierlich auf ihre Sicherheit überprüft werden müssen.

Im Gegensatz dazu ist für die Erzeugung von Schlüsseln unter Einsatz der Quantenmechanik und für deren Verteilung, nämlich insbesondere für das Prinzip der Quantum Key Distribution (QKD) zwar zumindest theoretisch der Beweis dafür erbracht worden, dass diese quantensicher sind, also einem unter Verwendung von Quantencomputern geführten Angriff widerstehen können. Allerdings gibt es auch bei der Nutzung dieser Verfahren in der Praxis eventuelle Angriffsmöglichkeiten, welche aus Fehlern bei ihrer technischen Implementierung, aus einer mangelnden Absicherung der für ihre Nutzung verwendeten technischen Systeme gegenüber einem unberechtigten Zugang oder aus dem "Unsicherheitsfaktor" Mensch, also aus Fehlern mit der Nutzung, Betreuung und/oder dem Management der entsprechenden Systeme befasster Fachkräfte, resultieren.

So resultieren insbesondere aus Mängeln beim technischen Aufbau Möglichkeiten für sogenannte Seitenkanalangriffe. Das Risiko solcher technischen Seitenkanäle kann zwar über eine Zertifizierung durch Sicherheitsgremien (BSI, NIST) stark verringert, aber letztlich doch niemals vollständig ausgeschlossen werden. Grundsätzlich gilt sicherlich zudem, dass kein sicheres Verfahren oder System gibt, welches nicht noch sicherer gemacht werden könnte.

Ein in der Technik bekanntes Prinzip zur Erhöhung der Sicherheit von Systemen ist das Prinzip des sogenannten "Robusten Kombinierers" (Robust Combiner). Gemäß diesem Prinzip werden zur Absicherung eines technischen Systems mehrere, jeweils grundsätzlich als sicher geltende Sicherheitsmechanismen parallel, respektive redundant, verwendet. Die dahinterstehenden Überlegung ist die, dass ein potenzieller Angreifer zwar ein oder zwei der redundant eingesetzten Sicherheitsmechanismen überwinden könnte, aber selten dazu in der Lage sein wird, alle der eingesetzten redundanten Sicherheitsmechanismen zu überwinden oder außer Kraft zu setzen.

Aufgabe der Erfindung ist es, eine Lösung bereitzustellen, durch welche die Sicherheit bei der Nutzung quantensicherer Schlüssel innerhalb eines der Kommunikation und dem Datenaustausch dienenden Netzwerksystems weiter erhöht werden kann. Hierzu ist ein entsprechendes Verfahren anzugeben.

Die Aufgabe wird durch ein Verfahren mit den Merkmalen des Patentanspruchs 1 gelöst. Vorteilhafte Aus- oder Weiterbildungen sind durch die Unteransprüche gegeben.

Bevor nachfolgend das zur Lösung der Aufgabe vorgeschlagene Verfahren näher beschrieben wird, sollen an dieser Stelle zunächst kurze Erläuterungen zu einigen der dabei verwendeten Begriffe und zu dem diesen Begriffen im Kontext der Beschreibung sowie der Patentansprüche zugrunde gelegten Verständnis gegeben werden.

Schlüssel, bei denen es sich zumindest aus theoretischer Sicht bewiesenermaßen um tatsächlich quantensichere Schlüssel handelt und welche insbesondere unter Nutzung eines Verfahrens der QKD oder quantentechnischer Einrichtungen, wie einem Quantum Random Number Generator (QRNG) erzeugt werden/wurden, werden im Kontext der Erfindungsbeschreibung, sprachlich verkürzend, auch als Quantenschlüssel bezeichnet. Demnach werden die Begriffe quantensicherer Schlüssel und Quantenschlüssel hier synonym gebraucht.

Der in diesem Dokument zumeist in der Mehrzahl verwendete Begriff der Zufallszahl wird gewissermaßen als Oberbegriff verwendet. Er bezeichnet insbesondere Zufallszahlen hoher Entropie, die als solches selbst auch als quantensichere Schlüssel verwendet werden könnten, bei denen es sich aber, soweit sie als Zufallszahlen zur Schlüsselerzeugung bezeichnet werden, um Zufallszahlen handelt, die an einer Stelle des Netzwerksystems, wie beispielsweise durch eine Entropiequelle, generiert werden, von hieraus jedoch an ein anderes Netzelement übertragen und erst dort, gewissermaßen auf lokaler Ebene, durch Anwendung einer Prozessierungsvorschrift in eine andere, dann als quantensicherer Schlüssel (finaler Anwendungsschlüssel) verwendete Zufallszahl überführt werden. Diesem Oberbegriff unterfallen nach dem hier zugrunde gelegten Verständnis darüber hinaus aber auch Identifikatoren (Identifier), welche einen quantensicheren Schlüssel oder eine Zufallszahl für die Schlüsselerzeugung bezeichnen, das heißt, diesem zugeordnet sind. Letzteres meint, auch bei derartigen Identifikatoren handelt es sich um Zufallszahlen hoher Entropie.

Als Netzelement wird in dem hiesigen Kontext eine, als ein Bestandteil des betrachteten Netzwerksystems an zumindest ein Netzwerk (wie beispielsweise ein Mobilfunknetz, ein sonstiges drahtloses, zum Beispiel THz-Netzwerk, optisches Netzwerk (gegebenenfalls auch unter Einbeziehung von Satelliten), ein Festnetz oder auch ein Netzwerk für das Kabelfernsehen) angebundene (gegebenenfalls auch aus mehreren zum Beispiel in einem LAN zusammenwirkenden Geräten bestehende oder durch Einheiten im Zugangsnetz eines Providers gebildete) Einrichtung oder ein entsprechendes Gerät, respektive ein Endgerät, wie beispielsweise ein Mobilfunkgerät, bezeichnet. Insbesondere kann es sich dabei auch um ein Netzelement handeln, welches selbst nicht über technische Mittel zur Erzeugung von Quantenschlüsseln verfügt. Es kann sich aber auch um ein Netzelement handeln, welches über derartige Mittel verfügt oder gar eine entsprechende Einrichtung, wie eine Entropiequelle, eine QKD-Einrichtung, einen Quantencomputer oder einen Quantum Random Number Generator (QRNG) mit Netzwerkanschluss ausbildet oder umfasst.

Das zur Lösung der Aufgabe vorgeschlagene Verfahren zur Nutzung quantensicherer Schlüssel in einem Netzwerksystem geht von einem Netzwerksystem aus, welches mehrere Netzelemente umfasst, die über mindestens ein Netzwerk miteinander vernetzt sind. Das betreffende System umfasst ferner mindestens eine der nachfolgenden Einrichtungen:
- eine QKD-Einrichtung, also eine Einrichtung zum Generieren von Quantenschlüsseln, nämlich von bewiesenermaßen (unter theoretischen Gesichtspunkten) quantensicheren Schlüsseln,
- eine Entropiequelle (zum Beispiel Quantum Random Number Generator QRNG oder Quantencomputer), nämlich eine Einrichtung zum Generieren von Zufallszahlen hoher Entropie zur anderweitigen Schlüsselerzeugung.

Das System umfasst, wie gesagt, mindestens eine Einrichtung gemäß der vorstehenden Aufzählung. Dies heißt selbstverständlich auch, dass in dem Netzwerksystem Einrichtungen beider genannten Kategorien existieren können und typischerweise auch existieren werden oder mehrere Einrichtungen nur einer dieser Kategorien Bestandteil dieses Systems sein können.

Entsprechend dem Verfahren werden zwischen zwei Netzelementen eines solchen Netzwerksystems mindestens zwei Zufallszahlen ausgetauscht und durch mindestens eines dieser Netzelemente mindestens zwei (schon aufgrund ihres Charakters als Zufallszahl verschiedene) Zufallszahlen, nämlich entweder die zuvor übertragenen Zufallszahlen selbst oder eine gleiche Anzahl von jeweils mit einer dieser übertragenen Zufallszahlen verknüpfte, bei diesem Netzelement bereits vorliegende Zufallszahlen, gemäß einer nur dem die Zufallszahlen empfangenden Netzelement oder nur den beiden die Zufallszahlen austauschenden Netzelementen bekannten Prozessierungsvorschrift (Schlüsselableitungsfunktion KDF) unter Erzeugung eines quantensicheren Schlüssels miteinander verarbeitet. Die Übertragung und Verarbeitung der mindestens zwei Zufallszahlen wird dabei unter der auf mehreren System- und Verfahrensebenen erfolgenden Anwendung des Konzepts des robusten Kombinierers (Robust Combiner) durchgeführt.

Hierbei werden die einzelnen der mindestens zwei, hinsichtlich ihrer Art jeweils identischen Zufallszahlen über eine entsprechende Anzahl unterschiedlicher Netzwerkpfade, nämlich über mindestens zwei disjunkte, eine solche Systemebene ausbildende Netzwerkpfade übertragen, welche die beiden genannten Netzelemente jeweils miteinander verbinden. Diese mindestens zwei Zufallszahlen werden über die mindestens zwei vorgenannten disjunkten Netzwerkpfade nach dem Prinzip der Key-Encapsulation (Key Encapsulation Mechanism - KEM) verschlüsselt übertragen. Die insoweit eine Verfahrensebene ausbildende Verschlüsselung erfolgt dabei in den verschiedenen mindestens zwei disjunkten Netzwerkpfaden nach unterschiedlichen (vorzugsweise nach einem in jedem Pfad anderen) PQC-Verfahren unter Verwendung eines jeweils anderen Schlüssels, welcher zuvor bei den Netzelementen hinterlegt oder zwischen ihnen ausgetauscht wurde.

Was die angesprochenen unterschiedlichen PQC-Verfahren anbelangt, so wird hierbei ein bekanntes oder eine Auswahl bekannter PQC-Verschlüsselungsverfahren eingesetzt, wobei nur den beiden Zufallszahlen miteinander austauschenden Netzelementen bekannt ist, um welches oder welche Verfahren es sich hierbei handelt. Welches oder welche PQC-Verfahren und gegebenenfalls in weleher Kombination und/oder Reihenfolge dabei zum Einsatz gelangen, kann in den Netzelementen fest hinterlegt (implementiert) sein oder - nähere Ausführungen dazu sollen später noch erfolgen - zwischen den Netzelementen im Zusammenhang mit der Übertragung der Zufallszahlen gewissermaßen verabredet werden. Die beteiligten Netzelemente müssen jedenfalls dazu ausgebildet sein, Daten unter Anwendung von PQC-Verfahren ver- und entschlüsseln zu können, so dass sich die Auswahl der Verfahren bei der Implementierung sicherlich auch an der insoweit gegebenen oder festzulegenden Beschaffenheit der Netzeinrichtungen ausrichten wird.

Was die Art der übertragenen und in mindestens einem der Netzelemente verarbeiteten Zufallszahlen anbelangt, so kann es sich hierbei um Zufallszahlen einer der früher grundsätzlich schon genannten Kategorien handeln, nämlich:
- um eine durch die mindestens eine Entropiequelle generierte Zufallszahl hoher Entropie zur Schlüsselerzeugung,
- um einen durch die mindestens eine QKD-Einrichtung generierten Quantenschlüssel,
- um einen früher durch ein Netzelement des Netzwerksystems erzeugten quantensicheren Schlüssel,
- um einen eine Zufallszahl zur Schlüsselerzeugung, einen Quantenschlüssel einer QKD-Einrichtung oder einen früher durch ein Netzelement des Netzwerksystems erzeugten quantensicheren Schlüssel bezeichnenden Identifikator, bei welchem es sich ebenfalls um eine Zufallszahl hoher Entropie handelt,
- um eine Kombination aus Identifikator und einer durch diesen bezeichneten Zufallszahl zur Schlüsselerzeugung oder einem durch diesen bezeichneten Quantenschlüssel oder einem durch diesen bezeichneten, früher durch ein Netzelement des Netzwerksystems erzeugten quantensicheren Schlüssel.

Vor dem Hintergrund der vorstehend genannten Kategorien sei an dieser Stelle nochmals ausdrücklich darauf hingewiesen, dass die dabei unter anderem genannten Identifikatoren ebenfalls Zufallszahlen hoher Entropie sind. Hierdurch stellt auch eine Kombination eines solchen Identifikators und einer durch diesen bezeichneten Zufallszahl für die Schlüsselerzeugung oder eines durch diesen bezeichneten Quantenschlüssels einer QKD-Einrichtung eine Zufallszahl dar.

Die verschlüsselt über die mindestens zwei disjunkten Netzwerkpfade übertragenen Zufallszahlen einer der vorgenannten Kategorien werden vorzugsweise signiert und hierbei, vorzugsweise (das heißt, die Verwendung anderer Algorithmen ist denkbar) nach einem PQC-Algorithmus signiert. Alternativ oder kumulativ können sich die Zufallszahlen zur Erzeugung quantensicherer Schlüssel nach dem vorgestellten Verfahren austauschenden Netzelemente auch untereinander mittels eines PQC-Verfahrens oder eines PQC-Zertifikates authentifizieren. In jedem Falle dienen die zuvor genannten Maßnahmen insbesondere dazu, die Identität der die Zufallszahlen erzeugenden und übermittelnden Einrichtung sowie die Integrität der Zufallszahlen sicherzustellen und/oder dazu, dass die Zufallszahlen austauschenden Netzelemente darauf vertrauen können, dass die (jeweilige) Gegenseite die ist, für die sie sich ausgibt, sie also autorisiert ist.

Was die Art der für die Verschlüsselung und für das Signieren in den einzelnen Übertragungspfaden verwendeten PQC-Verfahren sowie deren Festlegung, respektive Auswahl anbelangt, so kommen hierfür, ebenso wie für die Auswahl der dafür verwendeten Schlüssel, unterschiedliche Möglichkeiten in Betracht. So kann die Art des jeweils verwendeten PQC-Verfahrens gemäß Implementierung bei zwei beteiligten, das Verfahren für den Austausch von Zufallszahlen zur Berechnung eines quantensicheren Schlüssels nutzenden Netzelementen bei diesen Einrichtungen im Zusammenhang mit der Verfahrensimplementierung oder aufgrund einer Vorabsprache oder auf der Grundlage eines zuvor ausgetauschten gemeinsamen Geheimnisses (shared secret, respektive pre-shared secret) zwischen deren Betreibern festgelegt (in den Netzeinrichtungen hinterlegt) werden und zum Beispiel jedem der disjunkten Netzwerkpfade ein anderes PQC-Verschlüsselungs-/Signierverfahren fest zugewiesen sein. Eine solche mehr oder weniger starre Zuweisung beeinträchtigt die Sicherheit des der Erfindung zugrundeliegenden Gesamtkonzepts insofern nicht oder kaum, als ein potenzieller Angreifer erst Kenntnis über diese Zuordnung erlangen müsste.

Andererseits wird natürlich das Verfahren bei seiner praktischen Umsetzung in ein umfassenderes Protokoll mit eingebettet sein, nach welchem zum Beispiel die jeweils beteiligten Netzelemente Kontakt zu einander aufnehmen (beispielsweise umfassend Signalisierungsnachrichten zur Signalisierung eines Verbindungswunsches und dessen Annahme sowie Austausch von Steuerdaten zum Aufbau der gewünschten Verbindung) und sich über vielerlei andere ihre Kommunikation miteinander betreffende Details verständigen. Im Zuge dessen kann auch eine Verständigung über das, respektive die zu verwendenden PQC-Verfahren erfolgen. Dies wird (muss aber nicht) typischerweise über nur einen Kanal/Pfad erfolgen. Die PQC-Verfahren eines gegebenenfalls zuvor vereinbarten Pools von PQC-Verfahren können zum Beispiel nach einem bestimmten Schema kodiert sein, so dass es dann ausreicht, im Rahmen des angesprochenen Protokolls zwischen den Netzelementen Daten mit entsprechenden die PQC-Verfahren bezeichnenden Kodierungen auszutauschen.

Dabei ist es im Grunde unschädlich, wenn ein potenzieller Angreifer diese Daten abfängt, da er überhaupt erst einmal Kenntnis davon haben müsste, dass diese die zu verwendenden PQC-Verfahren kodieren und sofern er sogar letzteres wüsste (was einer Übermittlung der Informationen zu den PQC-Verfahren im Klartext gleich käme), welche Überragungspfade später überhaupt und mit welchem PQC-Verfahren genutzt werden. Ähnliches gilt letztlich auch für die zur Verschlüsselung jeweils verwendeten Schlüssel, sofern diese nicht gewissermaßen als shared secret zuvor bei den beteiligten Netzelementen hinterlegt werden oder - im letztgenannten Fall zumindest für die zwischen den Netzelementen ausgetauschten Identifikatoren zu den jeweils zu verwendenden, bei ihnen bereits als shared secret vorliegenden Schlüsseln. Insoweit sei darauf hingewiesen, dass es sich bei diesen für die PQC-Verschlüsselung verwendeten Schlüsseln weder um die im Rahmen des vorgeschlagenen Verfahrens zur Schlüsselerzeugung ausgetauschten Zufallszahlen oder Schlüssel noch um die aus diesen - gewissermaßen als Ergebnis des vorgestellten Verfahrens - durch Anwendung mindestens einer Ableitungsfunktion (KDF = Key Derivation Function) berechneten quantensicheren Schlüssel handelt, welche später zur Absicherung der Kommunikation zweier Netzelemente verwendet werden.

Grundsätzlich ähnliche Überlegungen und Feststellungen wie zur Auswahl des PQC-Verfahrens lassen sich hinsichtlich der später bei der Berechnung der eigentlichen, zur Absicherung des weiteren Datenaustausches genutzten quantensicheren Schlüssel, hinsichtlich der Anwendung des Prinzips des robusten Kombinierers auf einer weiteren Verfahrensebene, verwendeten KDF(s) treffen. Demgemäß können sich die beteiligten Netzelemente auch hierüber durch den Austausch von die KDFs kodierenden Daten verständigen. Im einfachsten Falle kann es sich bei einer solchen KDF beispielsweise um eine bitweise XOR-Verknüpfung der zu dem quantensicheren Schlüssel verarbeiteten Zufallszahlen handeln. Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind) und auf die relative Einfachheit dieser Operation, sollte indessen zur weiteren Erhöhung der Sicherheit als Prozessierungsvorschrift zur Verrechnung der Zufallszahl hoher Entropie vorzugsweise eine durch das NIST (National Institute of Standards and Technology) standardisierte Key Derivation Function (KDF) verwendet werden.

Soweit bereits mehrfach die Übertragung der mindestens zwei Zufallszahlen über disjunkte Netzwerkpfade angesprochen wurde, kann es sich hierbei insbesondere um Netzwerkpfade mindestens zweier verschiedener Netzwerke handeln. Zu denken wäre in diesem Zusammenhang zum Beispiel an die Nutzung der Mobilfunknetze zweier verschiedener Provider. Darüber hinaus umfasst das Verfahren aber auch die Überlegung, respektive die Möglichkeit, disjunkte Netzwerkpfade zu verwenden, über welche die PQC-verschlüsselten Zufallszahlen in unterschiedlichen Netzwerken unter Nutzung voneinander verschiedener physikalischer Übertragungsmedien (zum Beispiel leitungsgebunden, Funk und optische Freiraumübertragung - gegebenenfalls unter Einbeziehung einer Satellitenübertragung) übertragen werden. Nähre Ausführungen dazu sollen später unter anderem im Zusammenhang mit der Darstellung möglicher Ausführungsbeispiele gegeben werden. Die hier angesprochene Möglichkeit einer Übertragung der einzelnen der jeweils mindestens zwei Zufallszahlen sogar über unterschiedliche Netzwerke (so gegebenenfalls auch unter Einbeziehung eines Netzwerkes für das Kabelfernsehen) ist letztlich der Grund warum im Zusammenhang mit dem hier beschriebenen Verfahren von einer Nutzung quantensicherer Schlüssel in einem Netzwerksystem gesprochen wird.

Zunächst auch noch auf einer abstrakteren Ebene, also noch nicht in Form konkreter Ausführungsbeispiele, sollen nachfolgend Ausführungen zu möglichen Verfahrenskonstellationen des bisher grundsätzlich dargestellten Verfahrens erfolgen.

Demnach können beispielsweise mindestens zwei Zufallszahlen, bei denen es sich jeweils um eine durch die mindestens eine Entropiequelle generierte Zufallszahl zur Schlüsselerzeugung und um einen diese bezeichnenden Identifikator in Form einer Zufallszahl handelt, durch ein eine Entropiequelle ausbildendes oder umfassendes Netzelement über das mindestens eine Netzwerk an ein sie empfangendes Netzelement übertragen werden. Bei dem sie empfangenden Netzelement werden die Zufallszahlen dann unter Anwendung mindestens einer dafür ausgewählten KDF miteinander zu einem quantensicheren Schlüssel und zu einem diesen Schlüssel eineindeutig bezeichnenden Identifikator verarbeitet sowie zur späteren Verwendung persistiert. Was den vorstehend mehrfach angesprochenen Identifikator anbelangt, schließt die dargestellte Verfahrensweise ausdrücklich auch die Möglichkeit ein, dass die mindestens zwei über die disjunkten Pfade übertragenen Zufallszahlen, im Hinblick darauf, dass diese später sowieso miteinander zu einem Schlüssel verarbeitet werden, mit demselben Identifikator verknüpft werden, welcher dann später auch als den berechneten quantensicheren Schlüssel eineindeutig bezeichnender Identifikator verwendet werden kann. Ferner sei angemerkt, dass die mindestens zwei Zufallszahlen auch durch mehrere Entropiequellen ("mindestens eine Entropiequelle") erzeugt werden können.

Bei der vorgenannten Entropiequelle kann es sich, wie bereits früher ausgeführt, insbesondere um einen Quantum Number Generator (QRNG) oder um einen Quantencomputer handeln. Darüber hinaus kann die Entropiequelle so ausgebildet sein, respektive betrieben werden, dass die von ihr generierten Zufallszahlen hinsichtlich ihrer Entropie, beispielsweise mittels eines Computers herkömmlicher Prägung unter Anwendung eines dafür in diesem implementierten, grundsätzlich bekannten Verfahrens, validiert werden.

Entsprechend ebenfalls umfasster, auch neben der zuvor beschriebenen in dem Netzwerksystem anwendbarer Verfahrensgestaltungen können mindestens zwei Zufallszahlen, bei denen es sich jeweils um einen durch die mindestens eine QKD-Einrichtung generierten Quantenschlüssel und um einen diesen Schlüssel bezeichnenden Identifikator in Form einer ebenfalls durch die betreffende Einrichtung generierten Zufallszahl handelt, durch diese Einrichtung über das mindestens eine Netzwerk an ein diese Zufallszahlen empfangendes Netzelement übertragen werden. Hier werden die empfangenen Zufallszahlen wiederum unter Anwendung mindestens einer dafür ausgewählten KDF miteinander zu einem neuen quantensicheren Schlüssel und zu einem diesen Schlüssel eineindeutig bezeichnenden Identifikator verarbeitet sowie zur späteren Verwendung persistiert werden. Für den beziehungsweise die Identifikatoren und im Hinblick auf das Verständnis "mindestens einer QKD -Einrichtung" gilt das bereits im Zusammenhang mit der Verwendung mindestens einer Entropiequelle gesagte.

Typischerweise werden die für die beiden zuvor betrachteten Verfahrensgestaltungen, nämlich eines durch eine Entropiequelle an ein Netzelement erfolgenden Übermittelns mindestens zweier Zufallszahlen für die Schlüsselerzeugung oder eines durch eine QKD-Einrichtung erfolgenden Übermittelns mindestens zweier ebenfalls Zufallszahlen darstellender Quantenschlüssel an ein Netzelement, dargestellten Übertragungsvorgänge sich mehrfach unter Übermittlung jeweils zweier weiterer Zufallszahlen/Quantenschlüssel wiederholen. Dies ist der Grund, warum mit den mindestens zwei Zufallszahlen zur Schlüsselerzeugung, respektive mit den mindestens zwei Quantenschlüsseln zur Erzeugung eines neuen quantensicheren Schlüssels, regelmäßig ein eine jeweilige Zufallszahl/einen jeweiligen Quantenschlüssel bezeichnender Identifikator an das für den Empfang bestimmte Netzelement übertragen wird.

Entsprechend wird der jeweils errechnete (neue) quantensichere Schlüssel zur späteren Verwendung in Zuordnung zu einem ihn bezeichnenden Identifikator persistiert. Vorzugsweise kann es bei einer praxisgerechten Implementierung des Verfahrens vorgesehen sein, das die in einem Netzelement erzeugten und persistierten Schlüssel eine begrenzte zeitliche Gültigkeitsdauer haben, nach deren Ablauf sie dann, nach dem Prinzip des First in - First Out wieder aus dem betreffenden Speicher gelöscht werden. Hierdurch wird, im Hinblick auf die nach dem Verfahren multimodale Anwendung des Prinzips des robusten Kombinierers (Robust Combiner), gewissermaßen eine weitere Verfahrensebene, respektive eine zusätzliche Kategorie in das Sicherheitskonzept des Verfahrens eingebracht. Dies führt insoweit zu einer weiteren Erhöhung der Sicherheit, als ein potenzieller Angreifer Informationen, welche er widerrechtlich erlangt hat, auch zur richtige Zeit, respektive zeitnah einsetzen muss, um in den Besitz gültiger quantensicherer Schlüssel zu kommen und mit deren Hilfe verschlüsselte Informationen abgreifen zu können.

Darüber hinaus kann ein Netzelement, welches zuvor Zufallszahlen von einer Entropiequelle und/oder Quantenschlüssel von einer QKD-Einrichtung empfangen und miteinander zu einem quantensicheren Schlüssel verarbeitet und zusammen mit einem diesen Schlüssel eineindeutig bezeichnenden Identifikator in einem Speicher persistiert hat, mindestens zwei von mehreren zuvor bei ihm erzeugte sowie persistierte Schlüssel als Zufallszahlen an ein anderes, selbst nicht über einen Zugang zu einer Entropiequelle oder zu einer QKD-Einrichtung verfügendes Netzelement übertragen. Hierbei werden diese Zufallszahlen sowohl durch das sie aussendende Netzelement als auch durch das sie empfangende Netzelement gemäß derselben Prozessierungsvorschrift miteinander zu einem quantensicheren gemeinsamen Schlüssel verarbeitet. Diesen gemeinsamen Schlüssel verwenden die beiden Netzelemente dann als One Time Pad zur Absicherung eines sich zwischen ihnen innerhalb des Zeitraums der Gültigkeit dieses Schlüssels anschließenden Datenaustausches.

Außerdem kann ein Netzelement, das zuvor Zufallszahlen von einer Entropiequelle und/oder Quantenschlüssel von einer QKD-Einrichtung empfangen und miteinander zu einem quantensicheren Schlüssel verarbeitet und zusammen mit einem diesen Schlüssel eineindeutig bezeichnenden Identifikator in einem Speicher persistiert hat, als Zufallszahlen mindestens zwei Identifikatoren, welche zwei von mehreren zuvor bei ihm erzeugte sowie persistierte Schlüssel bezeichnen, an ein anderes Netzelement übermitteln, welches zuvor dieselben quantensicheren Schlüssel aus von derselben Entropiequelle oder derselben QKD-Einrichtung empfangen Zufallszahlen in identischer Weise berechnet und in Zuordnung zu denselben Identifikatoren (gewissermaßen als pre-shared secret) persistiert hat. Durch das diese mindestens zwei Identifikatoren aussendende Netzelement und durch das diese Identifikatoren empfangende Netzelement werden dabei gemäß der jeweils selben Prozessierungsvorschrift die durch die Identifikatoren bezeichneten, bei ihnen persistierten Schlüssel zu einem neuen quantensicheren, von den beiden Netzelementen später zur Absicherung eines zwischen ihnen erfolgenden Datenaustausches zu verwendenden gemeinsamen Schlüssel verrechnet. Der hierbei entstehende Schlüssel wird von beiden Netzelementen jeweils in Zuordnung zu einem durch Verrechnung der beiden Identifikatoren gebildeten neuen Identifikator persistiert.

Bei der letzten zuvor beschrieben Ausgestaltung, respektive in dem dabei beschriebenen Kontext einer Nutzung des vorgeschlagenen Verfahrens, können sich die beiden Netzelemente auch wechselseitig jeweils Identifikatoren für bei ihnen vorhandene (vorzugsweise in einem Hardware Sicherheitsmodul, respektive Hardware Security Module, gespeicherte) Zufallszahlen/Schlüssel zusenden und aus diesen jeweils wiederum über disjunkte Netzwerkpfade übertragenen Zufallszahlen/Schlüsseln durch Anwendung mindestens einer KDF gemeinsame quantensichere Schlüssel mit zugehörigen Identifikatoren erzeugen.

Schließlich kann das Verfahren auch von zwei jeweils selbst mit einer QKD-Einrichtung, nämlich mit quantenmechanischen Mitteln zur Schlüsselerzeugung nach einem QKD-Verfahren ausgestattete und hierbei in einer QKD-Beziehung stehenden, also unter anderem über einen Quantenkanal miteinander verbundene sowie gemeinsam quantensichere Schlüssel nach einem (demselben) QKD-Verfahren erzeugende Netzelemente ausgeführt werden, sofern eines von ihnen außerdem über eine Entropiequelle verfügt. Letzteres überträgt hierbei mindestens zwei mittels seiner mindestens einen Entropiequelle erzeugte Zufallszahlen über mindestens zwei, von dem Quantenkanal verschiedene, disjunkte Netzwerkpfade an das andere Netzelement. Diese mindestens zwei Zufallszahlen und einen gemeinsam von ihnen mittels ihrer QKD-Einrichtungen erzeugten Quantenschlüssel verrechnen die beiden Netzelemente unter Anwendung wenigstens einer dafür ausgewählten KDF zu einem neuen quantensicheren Schlüssel. Durch eine solche Konstellation, respektive Implementierung des hier vorgeschlagenen Verfahrens, werden demnach die ohnehin schon sehr hohe Sicherheit bei der Anwendung von QKD-Verfahren zur Schlüsselerzeugung bei deren gleichzeitigem Austausch noch weiter erhöht und mögliche Seitenkanalangriffe erschwert.

Was die Wiederholung der Übertragungsvorgänge zur jeweiligen Übertragung mindestens zweier Zufallszahlen, die damit zusammenhängende Verknüpfung von Zufallszahlen/Schlüsseln mit Identifikatoren (Identifiern) sowie die vorzugsweise beschränkte zeitliche Gültigkeitsdauer der erzeugten quantensicheren Schlüssel anbelangt, gilt auch im Zusammenhang mit den beiden zuletzt beschriebenen Möglichkeiten für die Anwendung des Verfahrens, das bereits weiter oben für die Übertragung von Zufallszahlen einer Entropiequelle, respektive von Quantenschlüsseln einer QKD-Einrichtung, sowie zum Persistieren aus diesen erzeugter quantensicherer Schlüssel Gesagte.

Eine weitere mögliche Verfahrensgestaltung bezieht sich auf die Auswahl der zur Verrechnung der jeweiligen Zufallszahlen zu einem quantensicheren Schlüssel verwendeten KDF oder KDfs. Demnach wird von dem die Zufallszahlen aussendenden Netzelement an das andere, sie empfangende Netzelement eine Kennung ausgesendet wird, welche die Art der von den beiden Netzelementen zur Berechnung des gemeinsamen Schlüssels zu verwendende KDF oder KDFs kodiert. Bei der oder den durch diese Kennung kodierten KDFs handelt es sich um eine oder mehrere KDFs eines gemeinsamen zuvor zwischen den Netzelementen vereinbarten Pools von KDFs. Die Kodierung der von den Netzelementen zu verwendenden KDF oder KDFs in der besagten Kennung erfolgt dabei entsprechend einem ebenfalls zuvor zwischen den Netzelementen verabredeten Schema. Alle vorstehend und in den Patentansprüchen zur Auswahl oder Festlegung der KDF oder KDFs getroffenen Aussagen, gelten im Falle dessen, dass bei der Erzeugung eines quantensicheren Schlüssels mehrere KDFs zum Einsatz gelangen, analog für die Festlegung der Reihenfolge, in der diese auf die miteinander zu verrechnenden Zufallszahlen angewendet werden.

Was die im Zusammenhang mit der Erläuterung des vorgestellten Verfahrens angesprochenen Netzelemente und ihre Beschaffenheit betrifft, sollen später beispielhaft noch genauere Ausführungen erfolgen. Hier sei zunächst nur erwähnt, dass es sich bei diesen zum Bespiel um mobile Endgeräte oder um Integrated Access Devices IADs (auch Home Gateway oder Gateway Router) handeln kann, welche als Netzelemente auf lokaler Ebene aus den entsprechenden Zufallszahlen den quantensicheren Schlüssel errechnen und bei sich persistent abspeichern. Aus Sicht der Netzbetreiber, respektive Provider kann es sich bei einem solchen Netzelement beispielsweise um eine Basisstation eines Mobilfunknetzes oder um einen als Peering Point ausgebildeten Netzwerkknoten eines Zugangsnetzes zu einem Weitverkehrsnetz handeln.

Nachfolgend sollen anhand von Zeichnungen Ausführungsbeispiele der bisher eher abstrakt beschriebenen technischen Lösung gegeben und mögliche Anwendungen vorgestellt werden. Im Zusammenhang damit sollen Sicherheitsbetrachtungen angestellt und wesentliche Vorteile der Lösung nochmals herausgestellt werden.

Die Zeichnungen zeigen, respektive veranschaulichen im Einzelnen:
- Fig. 1:: das grundsätzliche Prinzip/Konzept des Verfahrens,
- Fig. 2:: einen Einsatzfall zur Verteilung von Zufallszahlen für die Schlüsselerzeugung an zwei Gateway Router
- Fig. 3:: die Nutzung des Verfahrens mit mobilen Endgeräten,
- Fig. 4:: ein Einsatzbeispiel mit drei Zufallszahlen von jeweils drei Entropiequellen empfangenden Netzelementen.

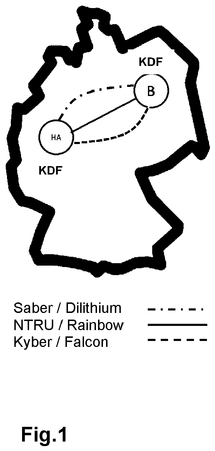

Der prinzipielle Ansatz der vorgeschlagenen Lösung ist in der Fig. 1 anhand eines Beispielsweise zwischen Berlin und der Stadt Hagen erfolgenden Austausches von Zufallszahlen dargestellt. Der Austausch von Zufallszahlen zur Erzeugung quantensicherer Schlüssel findet hierbei über drei disjunkte Netzwerkpfade statt - im allgemeinen Fall über N Netzwerkpfade, wobei die Zufallszahlen über die einzelnen Netzwerkpfade unter Nutzung der jeweils angegebenen PQC-Verfahren verschlüsselt und signiert werden. Je höher die Anzahl der verwendeten kryptographischen Verfahren und je höher die Anzahl der verwendeten Netzwerkpfade, desto sicherer ist das finale System, respektive der finale Anwendungsschlüssel und seine Verwendung. Unter disjunkten Netzwerkpfaden werden dabei unter anderem verstanden:
- Glasfaserstrecken: klassisch oder quantenoptisch
- Sichtverbindungen (Line Of Sight): klassisch oder quantenoptisch
- Ethernet Verbindungen, DSL Anschlüsse, Vektoring Anschlüsse: klassische Kryptographie
- Mobilfunkverbindungen: klassische Kryptographie, in kleinen Distanzen und ungestörten Umgebungen auch quantenoptisch
- WiFi, Bluetooth, NFC: klassische Kryptographie, in kleinen Distanzen und ungestörten Umgebungen auch quantenoptisch.
- TV Kabel: klassisch
- Satellitenverbindungen: klassisch und quantenoptisch

Bei dem in der Fig. 1 gezeigten Beispiel ließe sich beispielsweise ein Computer in einem Hagener Büro über eine Glasfaser FTTH Verbindung, eine Mobilfunkverbindung über das D1 Netz und eine TV-Kabelverbindung (für das Kabelfernsehen) realisieren. Die KDF-Verknüpfung der Zufallszahlen kann entweder im Gateway Router des Büros oder direkt von den Endgeräten oder auch von den auf diesen ausgeführten Applikationen vorgenommen werden. Somit eröffnet die vorgestellte Lösung die Möglichkeit einer Ende-zu-Ende- Verschlüsselung (End2End) direkt im Endgerät eines Nutzers, insbesondere auch durch eine entsprechende Applikation.

Die Nutzung von Z(P) möglichen disjunkten Netzpfaden zur Übermittlung von Z(Z) möglichen Zufallszahlen, sowie von Z(PQC) möglichen PQC-Algorithmen und von Z(KDF) möglichen KDF-Verknüpfungen (KDFs) erhöht die Sicherheit des Gesamtsystems (SG) um einen Faktor F(SG) = Z(P) x Z(Z) x Z(PQC) x Z(KDF), beispielsweise um F(SG) = 3^4 = 81 für Z(P) =3, Z(Z) = 3, Z(PQC) = 3 und Z(KDF) = 3. Wird hierbei die Anzahl der möglichen Zufallszahlen auf Z(Z) = 10 erhöht, so erhöht sich der Faktor für die Sicherheit des Gesamtsystems auf F(SG) = 3^3 x 10 = 270.

Ein Angreifer müsste nun Zugriff auf alle möglichen Netzwerkpfade und alle möglichen Zufallszahlen und alle möglichen PQC-Algorithmen und auch auf alle möglichen verwendeten KDFs haben, um das Gesamtsystem angreifen zu können, zumal die Wahl der verwendeten Pfade und Optionen unbekannt ist und diese sich auch zeitlich ändern können.

In Bezug auf die disjunkten Pfade existieren noch die besten Angriffsmöglichkeiten für einen Hacker in der Nähe eines Endpunktes. Jedoch hat jede Netzwerktechnologie ihren eigenen Endpunkt, das heißt,
- eine Glasfaser endet an einem Haus- oder Netzwerk Operating Center Anschluss, dessen Ort bestenfalls für mögliche Angreifer leicht einsehbar ist.
- ein TV-Kabel oder DSL-Kabel endet ebenfalls an einem einsehbaren Hausanschluss.
- Mobilfunk endet aber an einem 4G/5G Gateway Router direkt im Büro oder Netzwerkknoten. Ein IMSI Catcher stellt hier eine Angriffsmöglichkeit dar, allerdings werden unterschiedliche Catcher für unterschiedliche Netze benötigt.
- Satelliten lassen sich über ein SAT Gateway oder Satellitentelefon verbinden, dessen Verbindung ebenfalls abgefangen werden müsste. Im Falle der Nutzung einer Parabolantenne wird dies aufgrund der gerichteten Abstrahlung sehr schwierig.

Zusammenfassend lässt sich sagen, dass der Aufwand eines Angreifers, ein mit dem vorgeschlagenen Verfahren genutztes System, basierend auf der in mehreren Ebenen erfolgenden Anwendung des Prinzips des robusten Kombinierers in Verbindung mit disjunkten Pfaden oder gar Netzwerken (Netzen) anzugreifen, gegenüber dem Aufwand eines Angriffes auf ein System ohne Pfad- bzw. Netztrennung sowie der weiteren Optionen, das heißt, weitere mögliche Zufallszahlen, PQC Algorithmen und KDFs, deutlich steigt. Dazu müsste ein potenzieller Angreifer größte technische Anstrengungen in der Nähe des gesicherten Objektes (Haus, Büro, Netzwerkknoten) unternehmen. Es bleibt zu vermuten, dass eine technische Installation, um alle möglichen Pfade oder gar Netzwerke gleichzeitig belauschen zu können, einen sehr großen Aufwand darstellen würde, der nicht unbemerkt bliebe. Der eigentliche Schutz der Kommunikation erfolgt allerdings über die eingesetzten klassischen symmetrischen Verschlüsselungsverfahren, zum Beispiel per AES-256 unter Nutzung der erzeugten quantensicheren Schlüssel, welche demnach die Nutzdaten mit den robust kombinierten, respektive miteinander verrechneten Zufallszahlen verschlüsselt.

Im Folgenden werden weitere Anwendungen eines "Robusten Kombinierers" zur Absicherung von Netzwerkverkehren aufgezeigt.

### Zweiter Faktor eines quantenoptischen Netzwerks

Der robuste Kombinierer lässt sich als weiterer Faktor zur Erhöhung der Sicherheit in einem quantenoptischen Netzwerk einsetzen, zum Beispiel in einem QKD-Netzwerk zum sicheren Schlüsselaustausch oder in einem Netzwerk zur Verteilung von verschränkten photonischen Zuständen. Die quantenoptisch übertragenen Schlüssel lassen sich mit mehreren Schlüsseln des robusten Kombinierers durch KDF-Verknüpfungen, respektive KDFs, kombinieren. Somit wird eine Gefährdung des quantenoptischen Schlüsselaustauschsystems durch technische Seitenkanäle weiter minimiert. Auch lässt sich die Authentifizierung der Endpunkte über mehrere Faktoren über disjunkte Netzwerke absichern.

### Redundanz in einem quantenoptischen Netzwerk

Die dargestellte Lösung des mehrere System- und Verfahrensebenen einbeziehenden robusten Kombinierers (gewissermaßen eines robusten Meta-Kombinierers) kann im Falle eines Fehlers eines quantenoptischen Netzwerkes die Aufgabe des Schlüsselaustausches mit sehr hohem Sicherheitsstandard übernehmen. Ein typisches Fehlerszenario ist die Beschädigung einer Glasfaser während Erdarbeiten. Fällt eine Faser in einem quantenoptischen Netzwerk aus, so könnte der Fall eintreten, dass nicht mehr genug Schlüssel an bestimmte Endpunkte des quantenoptischen Netzwerkes geliefert werden können. Das hier dargestellte Verfahren kann eingesetzt werden, um über diverse disjunkte Netze dennoch genug Schlüssel bereitzustellen, um somit den Betrieb einer distribuierten Sicherheitsplattform weiter gewährleisten zu können.

### Absicherung von Gateway Routern und anderen Netzwerkelementen

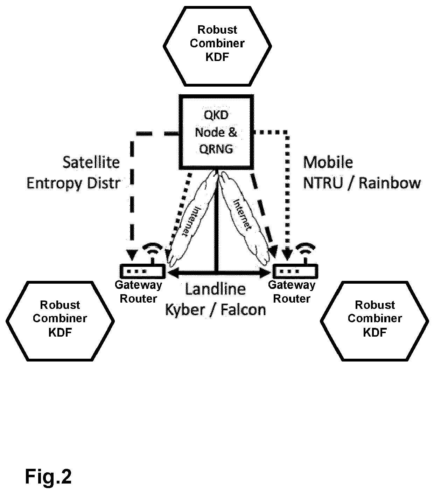

Besitzt ein Gateway Router Schnittstellen zu zwei disjunkten Netzwerken, so lassen sich quantensichere Schlüssel ebenfalls über das Konzept des multimodal eingesetzten "Robusten Kombinierers" entsprechend der vorgeschlagenen Lösung absichern. Eine entsprechende Konfiguration ist in der Fig. 2 dargestellt.

Der robuste Kombinierer kann in einen beliebigen Netzelement, beispielsweise in einem Gateway Router oder auch in einem QKD Netzwerkknoten eingesetzt werden und auch mögliche Quanten-Zufallszahlengeneratoren (QRNG) oder Quantencomputer (QC) enthalten.

Der "Robuste Kombinierer" (Robust Combiner) berechnet quantensichere Schlüssel durch die Kombination und Verknüpfung von möglichen Zufallszahlen, die insbesondere über disjunkte Netzwerkpfade, zum Beispiel via PSTN oder über Mobilfunk-Netze sowie unter Nutzung von mehreren möglichen PQC-Algorithmen, beispielsweise Kyber und Falcon oder NTRU / Rainbow PQC-Algorithmen gesichert und signiert übertragen wurden, und die durch mehrere mögliche KDFs miteinander kombiniert (verrechnet, respektive verarbeitet) werden. Die resultierenden quantensicheren Schlüssel können dann innerhalb der Netzwerke oder auch der QKD-Plattform weitergeleitet und an anderer Stelle von anderen Netzelementen, zum Beispiel auch von Gateway Routern zur Verschlüsselung ihrer Kommunikation mit anderen Netzelementen herangezogen werden.

Die Gateway Router, oder beliebige Endpunkte in einem Netzwerk, lassen sich mit unterschiedlichen Zufallszahlen verschlüsselt über PQC Verschlüsselungsalgorithmen und signiert über PQC-Signaturalgorithmen versorgen. Die Zufallszahlen, die über disjunkte Netze, also beispielsweise über ein leitungsgebundenes Netzwerk und/oder Mobilfunknetzwerke versendet wurden, werden von den Netzelementen, beispielsweise Gateway Routern, mittels ausgewählter möglicher KDFs verknüpft, wodurch quantensichere Anwendungsschlüssel berechnet werden.

### Absicherung von mobilen Endgeräten

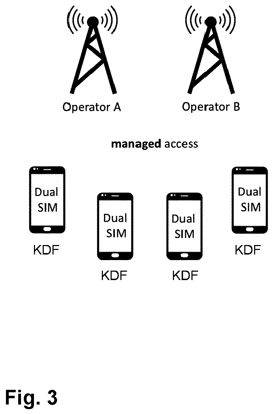

Über eine Kollaboration verschiedener Telekommunikationsgesellschaften, die disjunkte Netze betreiben, lassen sich mobile Endgeräte sicher mit Schlüsseln versorgen. Diese Situation wird in Fig. 3 dargestellt.

Ein Mobilfunk-Operator A und ein Mobilfunk-Operator B betreiben disjunkte Netze (Netzwerke). Die mobilen Endgeräte benötigen zwei SIM-Karten. SIM-Karte A verwendet das Netz des Mobilfunk-Operators A, SIM-Karte B das Netz des Mobilfunk-Operators B. Eine SIM-Karte oder insbesondere eine elektronische eSIM (eSIM = embedded SIM, mit SIM = Subscriber Identity Module) könnte auch mehrere verschiedene Mobilfunknetzbetreiber (Provider) unterstützen. Während Operator A seine Schlüssel mit PQC-Verschlüsselungsalgorithmus A und PQC-Signaturalgorithmus A sichert, nutzt Operator B PQC-Algorithmen der Familie B. Die mobilen Endgeräte erhalten somit zwei Schlüssel über disjunkte Mobilfunknetze und somit disjunkte Netzwerkpfade, die sie auf entsprechender Verfahrensebene nach dem Prinzip eines robusten Kombinierers verknüpfen können. Der kombinierte Schlüssel ist dadurch deutlich sicherer als jeder einzeln versendete Schlüssel.

Die mobilen "Dual-SIM" Endgeräte bedürfen zweier SIM-Karten zweier Netzwerkprovider, die disjunkte Mobilfunknetze betreiben, oder auch eines, welches mehrere Netzbetreiber unterstützen kann. Das Endgerät ist in einer Zelle beider Operatoren eingebucht, das zeitgleich oder auch zu unterschiedlichen Zeitpunkten und auch in unterschiedlichen Zellen geschehen kann. Der Benutzer hat dabei eine Vertragsbeziehung zu einem Operator zur Durchführung der Telefongespräche und Internetdienste. Jedoch bekommt der Benutzer im Rahmen seines Vertrages beispielsweise ein zusätzliches SIM eines weiteren Operators, über das ausschließlich Zufallszahlen unter Nutzung des Prinzips des "Robusten Kombinierers" im Rahmen des vorgestellten Verfahrens empfangen werden können.

Im Endgerät lassen sich sodann quantensichere Schlüssel berechnen und diese zur Verschlüsselung der Datenverkehre verwenden. Der Provider des Kunden/Nutzers muss einen entsprechenden Schlüssel an seinem Endpunkt der verschlüsselten Verbindung berechnen und den verwendeten Applikationen bereitstellen.

### Absicherung von Entropiequellen

Hierbei erfolgt beispielsweise ein quantensicherer Schlüsselaustausch basierend auf der PQC-verschlüsselten und PQC-authentifizierten Verteilung von Zufallszahlen aus einer zentralen Entropiequelle. Die empfangenen Zufallszahlen werden in einem Folgeschritt unter Anwendung von gleichen mathematischen Verknüpfungen (KDFs) mit identischen vorverteilten "shared secrets" lokal an örtlich unterschiedlichen Netzwerkknoten, Gateway Routern, mobilen Endgeräten oder "IoT" ("Internet of Things") Geräten zu quantensicheren Anwendungsschlüsseln verrechnet. Diese Anwendungsschlüssel, die an Endpunkten, welche später miteinander kommunizieren, identisch sind, dienen sodann zu Verschlüsselung der Datenverkehre über das beispielsweise öffentliche Netzwerk.

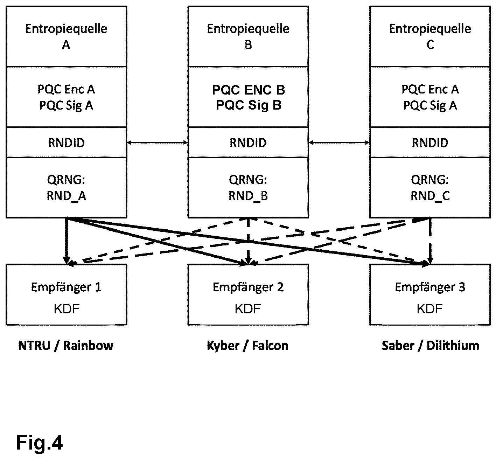

Soll die Verteilung der Zufallszahlen verschlüsselt erfolgen, um die Sicherheit des Gesamtsystems zu erhöhen, so lässt sich, wie bei dem beschriebenen Verfahren vorgesehen, ebenfalls der "Robuste Kombinierer" einsetzen. In diesem Fall existieren N Entropiequellen, die über jeweils disjunkte Netze ihre Zufallszahlen mit unterschiedlichen PQC Algorithmen verschlüsseln und signieren. Der Aufbau ist in Fig. 4 dargestellt.

Sofern alle Nutzer der Zufallszahlen dieselbe Gruppe der Entropiequellen verwenden, können diese die empfangenen Zufallszahlen RND_A, RND_B und RND_C durch verschiedene mögliche KDFs miteinander verknüpfen, um so eine neue Zufallszahl RND, respektive einen quantensicheren Schlüssel zu berechnen. Diese neue Zufallszahl RND ist für einen Angreifer unbekannt, sofern er nicht alle Verschlüsselungen auf allen disjunkten Strecken und auch die entsprechenden Zufallszahlen sowie die möglichen KDFs erfolgreich angegriffen hat.

Wie aus der Fig. 4 ersichtlich, versorgen drei Entropiequellen drei Empfänger (Netzelemente) mit Zufallszahlen, gesichert über drei verschiedene PQC-Verschlüsselungs- und Signaturalgorithmen. Die Empfänger führen KDF-Verknüpfungen aller Zufallszahlen RND_A, RND_B und RND_C aus, die zu einem Identifier (Identifikator) RNDID gehören und berechnen somit eine neu Zufallszahl RND als Basis zur weiteren Berechnung des finalen Anwendungsschlüssels. Die Zufallszahlen RND_A, RND_B und RND_C können dabei aus einem Pool von Zufallszahlen ausgewählt worden sein, der wesentlich mehr als nur 3 Zufallszahlen enthält, beispielsweise >> 1000.

Die Entropiequellen synchronisieren ihre Identifier über eine QKD-Installation oder über ein PQC KEM ("Post Quantum Cryptography Key Encapsulation Mechanism") Verfahren, das nicht zwingend QKD-Systeme benötigt. Somit sind die Quellen in der Lage, Zufallszahlen RND mit demselben Identifier RNDID zu verteilen. Eine Entropiequelle verschlüsselt ihre Daten (RNDID, RND_A) mit einem PQC Verschlüsselungsalgorithmus A und signiert die Daten mit einem PQC-Signaturalgorithmus A. Eine zweite Entropiequelle verschlüsselt und signiert ihre Daten (RNDID, RND_B) mit einem Verfahren B, eine dritte Quelle die Daten (RNDID, RND-C) mit einem Verfahren C.

Die Sicherheit der Entropieverteilung erhöht sich signifikant, denn der finale Anwendungsschlüssel berechnet sich aus der zentralen verteilten Zufallszahl und einer Permutation derselben. Ist schon die zentral verteilte Zufallszahl sicher verschlüsselt, so erhält der Angreifer überhaupt keine Information über die Basis der Berechnung der Anwendungsschlüssel - und somit auch keine Information über die Schlüssel selbst. Gleichzeitig kann der Faktor der Erhöhung der Sicherheit des Gesamtsystems F(SG) durch die Multiplikation der möglichen Kombinationen angegeben werden (siehe oben).

### Sicherheitsbetrachtung

Die Erhöhung der Sicherheit des Verfahrens beruht auf der Kombination verschiedener Aspekte:
1. der Nutzung von mindestens zwei oder auch mehr Zufallszahlen und deren Identifier aus einer Vielzahl von möglichen Zufallszahlen, generiert beispielsweise durch QKD-Systeme/-Einrichtungen, QRNG, oder Quantum Computer.
2. der Nutzung von mindestens zwei oder auch mehreren disjunkten Pfaden, beispielsweise von verschiedenen Netzbetreibern und/oder von verschiedenen leitungsgebundenen oder drahtlosen Netzen zur Übertragung der Zufallszahlen an Endpunkte, beispielsweise Gateway Router, Endgeräte und hierdurch mittelbar auch an dort ausgeführte Applikationen.
3. der Nutzung von verschiedenen Encryption-Verfahren und Algorithmen für die Übertragung, Sicherheit, Authentizität, respektive Verteilung der Zufallszahlen, beispielsweise mögliche QKD-Systeme und PQC-Algorithmen.
4. der Nutzung von möglichen KDFs zum Erzeugen von Schlüsseln aus mehreren Zufallszahlen in den Netzelementen und den Endpunkten, respektive Applikationen.
5. der sicheren Speicherung der erzeugten privaten quantensicheren Anwendungsschlüssel. Die privaten Anwendungsschlüssel müssen in gesicherten Umgebungen gehalten werden, um sie vor einem Zugriff durch Dritte zu schützen. Eine Speicherung sollte beispielsweis in dem SIM, respektive auf der SIM-Karte eines mobilen Endgeräts, in HLRs / VLRs (Home Location Register, Visitor Location Register) providerseitiger Einrichtungen oder in HSMs (Hardware Security Modules) erfolgen.

Die Nutzung einer Kombination von verschiedenen klassischen und PQ-KEM (mit KEM = Key Encapsulation Machanism) Schlüsselaustauschverfahren über disjunkte Netzwerkpfade steigert die Sicherheit eines einzelnen Verfahrens multiplikativ.

Die Nutzung des Prinzips eines robusten Kombinierers von klassischen, PQ-KEM und QKD kann die jeweiligen Nachteile der genannten Verfahren kompensieren. Die einzelnen Nachteile sind:
- Klassische Kryptographie wird durch Quantencomputer angegriffen und gilt als unsicher.
- PQ-Kryptographie (PQC) ist nicht beweisbar sicher, das heißt, es existiert kein Sicherheitsbeweis. Auch kann schlechte Programmierung der Sicherheitsbibliotheken potenzielle Angriffe ermöglichen.
- QKD verspricht einen sicheren Schlüsselaustausch, das heißt, gesichert durch die Gesetze der Quantenmechanik, sofern technische Seitenkanäle des Aufbaus ausgeschlossen werden können.

Lassen sich nun die Verfahren der klassischen Kryptographie, der PQ-Kryptographie (PQC) und des Quantenschlüsselaustausches robust kombinieren, so können die Nachteile der jeweiligen Methoden kompensiert werden. Die robuste Kombination von Schlüsseln ist beweisbar sicher, sofern einer der ausgetauschten Schlüssel sicher ist. Diese Aussage gilt sowohl für die KEM als auch für die SIG Verfahren Signierverfahren), so dass auch die Sicherheit der Authentifizierung der Endpunkte (Netzelemente) durch robuste Kombination der Signaturen oder Zertifikate multiplikativ gesteigert werden kann.

Disjunkte Netzwerkarchitekturen existieren. Sie müssen für Kunden/Nutzer, Organisationen oder Regierungen verwendbar gemacht werden. In diesem Sinne ist das vorgestellte Konzept skalierbar und modular. Die Integration in bestehende Netzwerkarchitekturen, Cloud-Architekturen, Edge-Cloud-Architekturen ist transparent, kostengünstig und minimal invasiv, sofern die Verwendung disjunkter Netzwerke sichergestellt ist.

Die Lösung ist netzagnostisch, das heißt, sie funktioniert auf Glasfasernetzen, Kupfernetzen, Mobilfunknetzen, Visible Light Communication Netzen und auch auf Satellitennetzen.

Die Lösung ist kosteneffektiv, massenmarkttauglich und minimal invasiv. Sie ist global und auch stellar einsetzbar. Die Lösung erhöht die Sicherheit einer gesamten Verbindung um einen Faktor der angegeben werden kann. Die Erweiterbarkeit zur Absicherung aller Telematik-Lösungen im Verkehr, Büros, Transportwesen, Fabriken, Logistikwesen etc. ist gegeben.

Die vorgestellte Lösung kann als weiterer Faktor für beispielsweise alle quantenoptischen Netze dienen, und sie kann neben leitungsgebunden Verbindungen auch mobile Verbindungen alleinig absichern.

Die Lösung kann als Redundanz für quantenoptische Netze dienen. Fällt ein quantenoptisches Netz aus, das heißt, wird eine Glasfaser angegriffen oder fällt eine Glasfaser aus, so kann der dargestellte robuste Kombinierer während der Auszeit den Dienst des Schlüsselaustausches übernehmen.

Die Lösung kann auch ohne QKD-Systeme für quantensichere Verbindungen genutzt werden, wenn entsprechende Zufallszahlen hoher Entropie und die zugehörigen Identifier, beispielsweise durch QRNG oder Quantencomputer, bereitgestellt werden.
- PQC-Signatur- und Verschlüsselungsalgorithmen sind in Form von "open source Bibliotheken" verfügbar. Diese Bibliotheken bedürfen einer Adaption und eine Neukompilation von OpenSSL, der zurzeit gängigsten Krypto-Bibliothek. Die Verfahren haben einen Stand erreicht, welcher es ermöglicht, dass zumindest die angewandte Forschung und Entwicklung bereits mit ihnen umgehen kann.
- AES-256 zur quantensicheren Verschlüsselung der Nutzdaten ist standardisiert und Teil gängiger Programmierumgebungen.
- PQ-PKI (Public Key Infrastrukturen) zum Enrollment und zur Verifikation von hybriden PQ-Zertifikaten liegen als Test-Implementierungen und Internetservices vor.
- Die Bereitstellung von Internetverbindungen über Socket-Protokolle oder REST Services (REST = Representational State Transfer) sind Programmierstandard.
- Router sind marktübliche Geräte zur Absicherung eines Heim- oder Büronetzwerks. Die Rechenleistung von Routern reicht aus, um die Verschlüsselung der Verkehre online zu berechnen. Virtualisierung der Router-Software zur Erhöhung der Flexibilität und Erweiterbarkeit ist ein aktueller Trend.
- Mobile Endgeräte mi Dual-SIM sind auf dem Markt verfügbar.
- Die Erfindung ist kompatibel mit eSIM für mobile Endgeräte.

Die Anforderung an verschiedene Netzwerkprovider im Sinne einer übergeordneten Sicherheitslösung zu kollaborieren ist für das vorgestellte Verfahren notwendig.

Entsprechend einem dazu in der vorangegangenen Ausführungen und Erläuterungen bereits gegebenen Verweis, soll abschließend beispielhaft (die Aufzählungen erheben insoweit keinen Anspruch auf Vollständigkeit) noch eine Übersicht zu bekannten PQ-Signierverfahren und PQ-Verschlüsselungsverfahren gegeben werden.

### Verfügbare Post Quantum Signaturverfahren:

* CRYSTALS-Dilithium: Dilithium2, Dilithium3, Dilithium5, Dilithium2-AES, Dilithium3-AES, Dilithium5-AES,
* Falcon: Falcon-512, Falcon-1024,
* Picnic: picnic_L1_FS, picnic_L1_UR, picnic_L1_full, picnic_L3_FS, picnic_L3_UR, picnic_L3_full, picnic_L5_FS, picnic_L5_UR, picnic_L5_full, picnic3_L1, picnic3_L3, picnic3_L5,
* Rainbow: Rainbow-I-Classic, Rainbow-I-Circumzenithal, Rainbow-I-Compressed, Rainbow-III-Classic, Rainbow-III-Circumzenithal, Rainbow-III-Compressed†, Rainbow-V-Classic, Rainbow-V-Circumzenithal, Rainbow-V-Compressed,
* SPHINCS+-Haraka: SPHINCS+-Haraka-128f-robust, SPHINCS+-Haraka-128f-simple, SPHINCS+-Haraka-128s-robust, SPHINCS+-Haraka-128s-simple, SPHINCS+-Haraka-192f-robust, SPHINCS+-Haraka-192f-simple, SPHINCS+-Haraka-192s-robust, SPHINCS+-Haraka-192s-simple, SPHINCS+-Haraka-256f-robust, SPHINCS+-Haraka-256f-simple, SPHINCS+-Haraka-256s-robust, SPHINCS+-Haraka-256s-simple,
* SPHINCS+-SHA256: SPHINCS+-SHA256-128f-robust, SPHINCS+-SHA256-128f-simple, SPHINCS+-SHA256-128s-robust, SPHINCS+-SHA256-128s-simple, SPHINCS+-SHA256-192f-robust, SPHINCS+-SHA256-192f-simple, SPHINCS+-SHA256-192s-robust, SPHINCS+-SHA256-192s-simple, SPHINCS+-SHA256-256f-robust, SPHINCS+-SHA256-256f-simple, SPHINCS+-SHA256-256s-robust, SPHINCS+-SHA256-256s-simple,
* SPHINCS+-SHAKE256: SPHINCS+-SHAKE256-128f-robust, SPHINCS+-SHAKE256-128f-simple, SPHINCS+-SHAKE256-128s-robust, SPHINCS+-SHAKE256-128s-simple, SPHINCS+-SHAKE256-192f-robust, SPHINCS+-SHAKE256-192f-simple, SPHINCS+-SHAKE256-192s-robust, SPHINCS+-SHAKE256-192s-simple, SPHINCS+-SHAKE256-256f-robust, SPHINCS+-SHAKE256-256f-simple, SPHINCS+-SHAKE256-256s-robust, SPHINCS+-SHAKE256-256s-simple.

### Verfügbare Post Quantum Verschlüsselungsverfahren / KEM

* BIKE: BIKE-L1, BIKE-L3,
* Classic McEliece: Classic-McEliece-348864, Classic-McEliece-348864f, Classic-McEliece-460896, Classic-McEliece-460896f, Classic-McEliece-6688128, Classic-McEliece-6688128f, Classic-McEliece-6960119, Classic-McEliece-6960119f, Classic-McEliece-8192128, Classic-McEliece-8192128f,
* FrodoKEM: FrodoKEM-640-AES, FrodoKEM-640-SHAKE, FrodoKEM-976-AES, FrodoKEM-976-SHAKE, FrodoKEM-1344-AES, FrodoKEM-1344-SHAKE,
* HQC: HQC-128, HQC-192, HQC-256,
* Kyber: Kyber512, Kyber512-90s, Kyber768, Kyber768-90s, Kyber1024, Kyber1024-90s
* NTRU: NTRU-HPS-2048-509, NTRU-HPS-2048-677, NTRU-HPS-4096-821, NTRU-HPS-4096-1229, NTRU-HRSS-701, NTRU-HRSS-1373,
* NTRU-Prime: ntrulpr653, ntrulpr761, ntrulpr857, ntrulpr1277, sntrup653, sntrup761, sntrup857, sntrup1277,
* SABER: LightSaber-KEM, Saber-KEM, FireSaber-KEM,
* SIKE: SIDH-p434, SIDH-p434-compressed, SIDH-p503, SIDH-p503-compressed, SIDH-p610, SIDH-p610-compressed, SIDH-p751, SIDH-p751-compressed, SIKE-p434, SIKE-p434-compressed, SIKE-p503, SIKE-p503-compressed, SIKE-p610, SIKE-p610-compressed, SIKE-p751, SIKE-p751-compressed.

## Patentansprüche

1. Verfahren zur Nutzung quantensicherer Schlüssel in einem Netzwerksystem, welches mehrere über mindestens ein Netzwerk miteinander vernetzte Netzelemente sowie mindestens eine der nachfolgenden, ein Netzelement oder einen Teil davon ausbildenden Einrichtungen umfasst:
- eine QKD-Einrichtung, nämlich eine Einrichtung zum Generieren von Quantenschlüsseln nach einem QKD-Verfahren, das heißt nach einem Verfahren der Quantum Key Distribution,
- eine Entropiequelle, nämlich eine Einrichtung zum Generieren von Zufallszahlen hoher Entropie zur anderweitigen Schlüsselerzeugung, nämlich zur Erzeugung quantensicherer Schlüssel,
**dadurch gekennzeichnet, dass** unter auf mehreren System- und Verfahrensebenen erfolgender Anwendung des Konzeptes des robusten Kombinierers durch zwei Netzelemente des Netzwerksystems mindestens zwei Zufallszahlen ausgetauscht und durch mindestens eines der Netzelemente mindestens zwei Zufallszahlen, nämlich die übertragenen Zufallszahlen selbst oder eine gleiche Anzahl von jeweils mit einer dieser übertragenen Zufallszahlen verknüpften, bei diesem Netzelement bereits vorliegende Zufallszahlen unter Erzeugung eines quantensicheren Schlüssels miteinander verarbeitet werden, wobei
a.) die einzelnen der mindestens zwei, bezüglich ihrer Art identischen Zufallszahlen, hinsichtlich eines robusten Kombinierens auf Systemebene, über eine entsprechende Anzahl unterschiedlicher Netzwerkpfade übertragen werden, nämlich über mindestens zwei disjunkte Netzwerkpfade, welche die beiden Netzelemente jeweils miteinander verbinden, und
b.) dabei die über die mindestens zwei disjunkten Netzwerkpfade übertragenen Zufallszahlen nach dem Prinzip der Key-Encapsulation verschlüsselt übertragen werden, indem ihre Verschlüsselung in den verschiedenen der mindestens zwei disjunkten Netzwerkpfade, hinsichtlich eines robusten Kombinierens auf Verfahrensebene, nach unterschiedlichen PQC-Verfahren unter Verwendung eines jeweils anderen Schlüssels erfolgt, und
c.) die mindestens zwei von einem Netzelement empfangenen Zufallszahlen oder die mit diesen verknüpften Zufallszahlen, hinsichtlich eines robusten Kombinierens auf einer weiteren Verfahrensebene, durch Anwendung einer Prozessierungsvorschrift, nämlich durch Anwendung mindestens einer hinsichtlich ihrer Art dafür ausgewählten, nur dem die Zufallszahlen empfangenden Netzelement oder nur den beiden Zufallszahlen miteinander austauschenden Netzelementen bekannten Key Derivation Function KDF, das heißt, einer Schlüsselableitungsfunktion, unter Erzeugung des quantensicheren Schlüssels miteinander verarbeitet werden.

2. Verfahren nach Anspruch 1, **dadurch gekennzeichnet, dass** eine jeweilige der mindestens zwei übertragenen oder der mindestens zwei miteinander verarbeiteten Zufallszahlen eine Zufallszahl einer der folgenden Kategorien ist oder enthält:
- eine durch die mindestens eine Entropiequelle generierte Zufallszahl hoher Entropie zur Schlüsselerzeugung,
- einen durch die mindestens eine QKD-Einrichtung generierten Quantenschlüssel,
- einen früher durch ein Netzelement des Netzwerksystems erzeugten quantensicheren Schlüssel,
- einen eine Zufallszahl zur Schlüsselerzeugung, einen Quantenschlüssel einer QKD-Einrichtung oder einen früher durch ein Netzelement des Netzwerksystems erzeugten quantensicheren Schlüssel bezeichnenden Identifikator, bei dem es sich ebenfalls um eine Zufallszahl hoher Entropie handelt,
- eine Kombination aus Identifikator und einer durch diesen bezeichneten Zufallszahlzahl zur Schlüsselerzeugung oder einem durch diesen bezeichneten Quantenschlüssel oder einem durch diesen bezeichneten, früher durch ein Netzelement des Netzwerksystems erzeugten quantensicheren Schlüssel.

3. Verfahren nach Anspruch 1 oder 2, **dadurch gekennzeichnet, dass** verschlüsselt über die disjunkten Netzwerkpfade übertragenen Zufallszahlen, vorzugswiese nach einem PQC-Algorithmus, signiert werden.

4. Verfahren nach einem der Ansprüche 1 bis 3, **dadurch gekennzeichnet, dass** die Zufallszahlen miteinander austauschenden Netzelemente sich untereinander nach einem PQC-Verfahren oder mittels eines PQC-Zertifikats authentifizieren.

5. Verfahren nach einem der Ansprüche 1 bis 4, **dadurch gekennzeichnet, dass** die mindestens zwei Zufallszahlen über disjunkte Netzwerkpfade, mindestens zweier verschiedener Netzwerke übertragen werden.

6. Verfahren nach Anspruch 5, **dadurch gekennzeichnet, dass** die mindestens zwei Zufallszahlen über disjunkte, voneinander verschiedene physikalische Übertragungsmedien verwendende Netzwerkpfade übertragen werden.

7. Verfahren nach einem der Ansprüche 1 bis 6, **dadurch gekennzeichnet, dass** mindestens zwei Zufallszahlen, wobei es sich jeweils um eine durch die mindestens eine Entropiequelle generierte Zufallszahl zur Schlüsselerzeugung und um einen diese bezeichnenden Identifikator in Form einer Zufallszahl handelt, durch ein die mindestens eine Entropiequelle ausbildendes oder umfassendes Netzelement über das mindestens eine Netzwerk an ein sie empfangendes Netzelement übertragen werden, wo sie unter Anwendung mindestens einer dafür ausgewählten KDF miteinander zu einem quantensicheren Schlüssel und zu einem diesen Schlüssel eineindeutig bezeichnenden Identifikator verarbeitet sowie zur späteren Verwendung persistiert werden.

8. Verfahren nach Anspruch 7, **dadurch gekennzeichnet, dass** die Zufallszahlen durch einen Quantum Number Generator (QRNG) oder durch einen Quantencomputer erzeugt werden.

9. Verfahren nach einem der Ansprüche 1 bis 6, **dadurch gekennzeichnet, dass** mindestens zwei Zufallszahlen, bei denen es sich jeweils um einen durch die mindestens eine QKD-Einrichtung generierten Quantenschlüssel und um einen diesen Schlüssel bezeichnenden Identifikator in Form einer Zufallszahl handelt, durch die QKD-Einrichtung über das mindestens eine Netzwerk an ein sie empfangendes Netzelement übertragen werden, wo sie unter Anwendung mindestens einer dafür ausgewählten KDF miteinander zu einem neuen quantensicheren Schlüssel und zu einem diesen Schlüssel eineindeutig bezeichnenden Identifikator verarbeitet sowie zur späteren Verwendung persistiert werden.

10. Verfahren nach einem der Ansprüche 1 bis 9, **dadurch gekennzeichnet, dass** die mindestens zwei Zufallszahlen an ein mobiles Endgerät oder an ein Integrated Access Device IAD übertragen werden und dieses Netzelement hieraus auf lokaler Ebene den quantensicheren Schlüssel errechnet und bei sich persistiert.

11. Verfahren nach Verfahren nach einem der Ansprüche 1 bis 9, **dadurch gekennzeichnet, dass** die mindestens zwei Zufallszahlen an eine Basisstation eines Mobilfunknetzes oder einen als Peering Point ausgebildeten Netzwerkknoten eines Zugangsnetzes zu einem Weitverkehrsnetz übertragen werden und dieses Netzelement hieraus auf lokaler Ebene den quantensicheren Schlüssel errechnet und bei sich persistiert.

12. Verfahren nach einem der Ansprüche 7 bis 11, **dadurch gekennzeichnet, dass** das Netzelement, welches zuvor Zufallszahlen von der mindestens einen Entropiequelle und/oder Quantenschlüssel von der mindestens einen QKD-Einrichtung empfangen und jeweils miteinander zu einem quantensicheren Schlüssel verarbeitet und zusammen mit einem diesen Schlüssel eineindeutig bezeichnenden Identifikator in einem Speicher persistiert hat, mindestens zwei von mehreren zuvor in dieser Weise bei ihm erzeugte sowie persistierte Schlüssel als Zufallszahlen an ein anderes, selbst nicht über einen Zugang zu einer Entropiequelle oder zu einer QKD-Einrichtung verfügendes Netzelement überträgt und dass diese Zufallszahlen, durch das sie aussendende Netzelement sowie durch das sie empfangende Netzelement gemäß derselben Prozessierungsvorschrift miteinander zu einem quantensicheren gemeinsamen Schlüssel verarbeitet werden, welchen die beiden Netzelemente dann als One Time Pad zur Absicherung eines zwischen ihnen erfolgenden Datenaustausches verwenden.

13. Verfahren nach einem der Ansprüche 7 bis 11, **dadurch gekennzeichnet, dass** das Netzelement, welches zuvor Zufallszahlen von der mindestens einen Entropiequelle und/oder Quantenschlüssel von der mindestens einen QKD-Einrichtung empfangen und miteinander zu einem quantensicheren Schlüssel verarbeitet und zusammen mit einem diesen Schlüssel eineindeutig bezeichnenden Identifikator in einem Speicher persistiert hat, als Zufallszahlen mindestens zwei Identifikatoren, welche zwei von mehreren zuvor in derselben Weise bei ihm erzeugte sowie persistierte Schlüssel bezeichnen, an ein anderes Netzelement übermittelt, welches zuvor dieselben quantensicheren Schlüssel aus von derselben Entropiequelle und/oder derselben QKD-Einrichtung empfangen Zufallszahlen in identischer Weise berechnet und in Zuordnung zu denselben Identifikatoren persistiert hat und dass durch das diese mindestens zwei Identifikatoren aussendende Netzelement und durch das diese Identifikatoren empfangende Netzelement gemäß derselben Prozessierungsvorschrift die durch die Identifikatoren bezeichneten, bei ihnen persistierten Schlüssel, unter Anwendung wenigstens einer dafür ausgewählten KDF zu einem neuen quantensicheren, von den beiden Netzelementen später zur Absicherung eines zwischen ihnen erfolgenden Datenaustausches zu verwendenden gemeinsamen Schlüssel verrechnen und in Zuordnung zu einem durch Verrechnung der beiden Identifikatoren gebildeten neuen Identifikator persistieren.

14. Verfahren nach einem der Ansprüche 1 bis 6, **dadurch gekennzeichnet, dass** durch ein mit mindestens einer Entropiequelle und mit einer QKD-Einrichtung, nämlich mit quantenmechanischen Mitteln zur Schlüsselerzeugung nach einem QKD-Verfahren ausgestattetes Netzelement an ein anderes, mit ihm über einen Quantenkanal verbundenes und in einer QKD-Beziehung stehendes, das heißt ebenfalls mit einer QKD-Einrichtung zur Schlüsselerzeugung nach demselben QKD-Verfahren ausgestattetes Netzelement mindestens zwei mittels seiner mindestens einen Entropiequelle erzeugte Zufallszahlen über mindestens zwei, von dem Quantenkanal verschiedene, disjunkte Netzwerkpfade überträgt und dass die beiden Netzelemente diese mindestens zwei Zufallszahlen und einen gemeinsam von ihnen mittels ihrer QKD-Einrichtungen erzeugten Quantenschlüssel unter Anwendung wenigstens einer dafür ausgewählten KDF zu einem neuen quantensicheren Schlüssel verrechnen.

15. Verfahren nach einem der Ansprüche 12 bis 14, **dadurch gekennzeichnet, dass** von dem die Zufallszahlen aussendenden Netzelement an das andere, sie empfangende Netzelement eine Kennung ausgesendet wird, welche die Art mindestens einer von den beiden Netzelementen zur Berechnung des gemeinsamen Schlüssels zu verwendende KDF, bei welcher es sich um eine KDF aus einem gemeinsamen zuvor zwischen den Netzelementen vereinbarten Pool von KDFs handelt, entsprechend einem ebenfalls zuvor zwischen den Netzelementen verabredeten Schema kodiert.
